# EUROPÄISCHE PATENTSCHRIFT

(11) **EP 1 619 368 B1**
(45) Veröffentlichungstag und Bekanntmachung des Hinweises auf die Patenterteilung: **30.06.2010**
(21) Anmeldenummer: 05014342.9
(22) Anmeldetag: 01.07.2005
(51) Int. Cl.: F02B 37/16, F02B 37/007, F02B 37/18, F02D 17/02

(54) **Sequentielle Laderansteuerung mit Zylinderabschaltung**
Sequential turbocharging control with cylinder deactivation
Commande séquentielle d'un turbo-compresseur avec déactivation de cylindres

(30) Priorität: 21.07.2004 DE 102004035323
(43) Veröffentlichungstag der Anmeldung: 25.01.2006
(73) Patentinhaber: Bayerische Motoren Werke Aktiengesellschaft, 80809 München (DE)
(72) Erfinder: Fahl, Thomas, 80802 München (DE); Dusel, Kurt, 80939 München (DE); Tribulowski, Jan, Dr., 85283 Wolnzach (DE)

(56) Entgegenhaltungen:
- EP-A- 0 735 253
- WO-A-2004/046519
- DE-A1- 4 330 525
- DE-A1- 10 314 583
- DE-A1- 19 835 594
- DE-C1- 3 824 406
- US-A1- 2003 192 313
- PATENT ABSTRACTS OF JAPAN Bd. 017, Nr. 271 (M-1417), 26. Mai 1993 (1993-05-26) & JP 05 005419 A (ISUZU MOTORS LTD), 14. Januar 1993 (1993-01-14)

## Beschreibung

Die vorliegende Erfindung betrifft einen Verbrennungsmotor mit den Merkmalen aus dem Oberbegriff des Patentanspruchs 1.

Die Erfindung geht von der deutschen Patentschrift DE 38 24 406 C1 aus. Aus dieser ist ein Verbrennungsmotor mit mehreren Zylindern bekannt, von denen mindestens einer während des Betriebes des Verbrennungsmotors ab- oder zuschaltbar ist. Weiter weist der Verbrennungsmotor zwei Abgasturbolader auf, die durch die Abgasströme antreibbar sind und Frischluft für den Verbrennungsmotor auf Ladedruck verdichten, wobei die Abgasströme durch eine Verbindung verbindbar sind und der Verbrennungsmotor ein Mittel aufweist, das in Abhängigkeit der in Betrieb befindlichen Zylinder im wesentlichen alle Abgase durch einen Abgasturbolader leitet, wobei ein Abgasturbolader mit einem Absperrorgan von den Abgasströmen zumindest teilweise abtrennbar ist.

Dieser Verbrennungsmotor weist jedoch einen vergleichsweise hohen Verbrauch auf.

Es war deshalb die Aufgabe der vorliegenden Erfindung einen Verbrennungsmotor zur Verfügung zu stellen, der die Nachteile des Standes der Technik nicht aufweist.

Gelöst wird die Aufgabe durch einen Verbrennungsmotor gemäß Anspruch 1. Eine bevorzugte Ausführungsform des erfindungsgemäßen Verbrennungsmotors wird mit Anspruch 2 beansprucht.

Verbrennungsmotoren mit mehreren Zylindern werden heutzutage oftmals mit zwei Turboladern betrieben, wobei jeweils die Abgase der einen Hälfte der Zylinder zu dem einen Turbolader und die andere Hälfte der Abgase der Zylinder zu dem anderen Turbolader geleitet werden. Stand der Technik ist es weiterhin, im unteren bis mittleren Lastbereich des Motors Zylinder abzuschalten, um Kraftstoff zu sparen. Aus der DE 103 14 583 A1 ist ein Verbrennungsmotor mit Zylinderabschaltung und zwei Turboladern bekannt, bei dem Zylindergruppen abschaltbar sind. Dieser Verbrennungsmotor weist jedoch einen vergleichsweise hohen Verbrauch auf.

Es war deshalb die Aufgabe der vorliegenden Erfindung einen Verbrennungsmotor zur Verfügung zustellen, der die Nachteile des Standes der Technik nicht aufweist.

Gelöst wird die Aufgabe durch einen Verbrennungsmotor gemäß Patentanspruch 1. Bevorzugte Ausführungsform des erfindungsgemäßen Verbrennungsmotors sind im Anspruch 2 beansprucht.

Es war für den Fachmann überaus erstaunlich und nicht zuwarten, dass es mit dem erfindungsgemäßen Motor gelingt den Kraftstoffverbrauch im unteren bzw. im mittleren Lastbereich zu senken. Der erfindungsgemäße Motor ist einfach und kostengünstig herzustellen und zu betreiben. Die Zylinder können einzeln oder in Gruppen abgeschaltet werden. Das Ansprechverhalten der Turbolader bei Wiederinbetriebnahme ist sehr schnell. Es kann zunächst nur ein Turbolader für alle Zylinder genutzt werden. Erst bei hoher Lastanforderung wird der zweite Turbolader hinzugeschaltet. Des weiteren können bei dem erfindungsgemäßen Motor die jeweiligen Turbolader größer als beim Stand der Technik ausgeführt werden, was deren Wirkungsgrad verbessert.

Bei dem erfindungsgemäßen Motor ist es möglich die Abgasströme miteinander zu verbinden. Durch ein entsprechendes Mittel, beispielsweise eine Klappe kann das gesamte in dem Verbrennungsmotor entstehende Abgas zumindest weitestgehend zu einem Abgasturbolader geleitet werden. Der andere Turbolader ist dadurch von dem Abgasstrom zumindest weitestgehend abgetrennt.

Der erfindungsgemäße Verbrennungsmotor weist Stellorgane auf, die so einstellbar sind, dass an der Luftseite des abgeschalteten Abgasturboladers Ladedruck anliegt. Die vorliegende Erfindung hat den Vorteil, dass bei einer Wiederinbetriebnahme des abgeschalteten Abgasturboladers dessen Anspringverhalten erheblich reduziert werden kann.

In einer weiteren bevorzugten Ausführungsform der vorliegenden Erfindung ist jeweils einem Abgasturbolader ein Vorkatalysator oder ein motornaher Hauptkatalysator nachgeordnet.

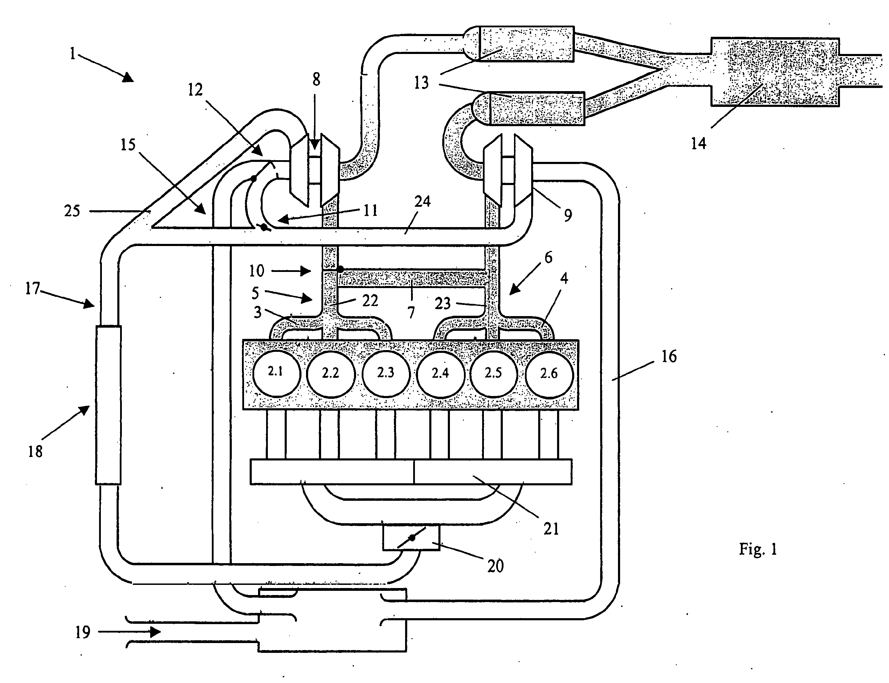

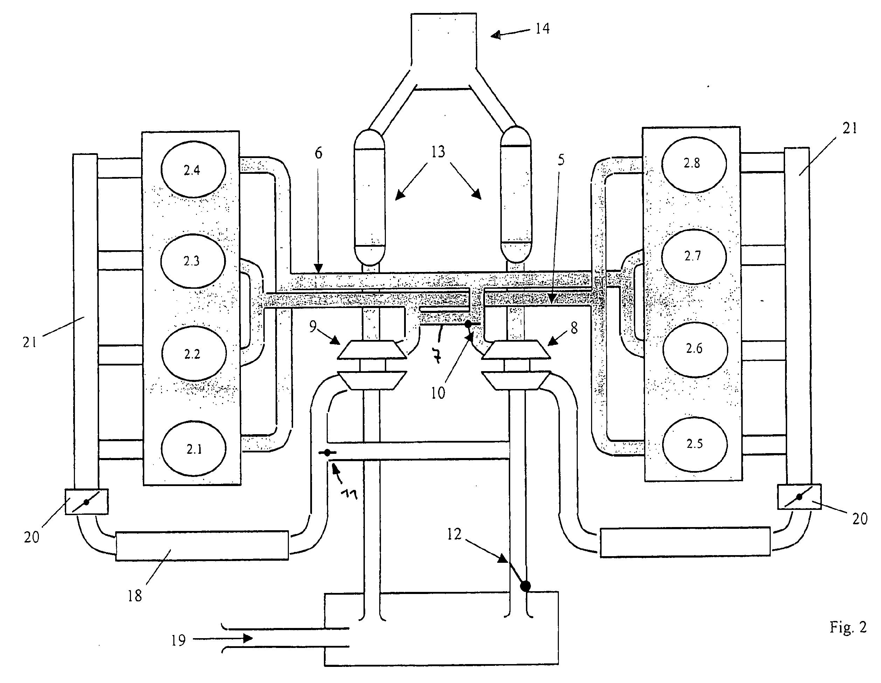

Im folgenden wird die Erfindung anhand der Figuren 1 und 2 erläutert. Diese Erläuterungen sind lediglich beispielhaft und schränken den allgemeinen Erfindungsgedanken nicht ein.

**Figur 1** zeigt einen erfindungsgemäßen 6-Zylinder-Motor.

**Figur 2** zeigt einen erfindungsgemäßen 8-Zylinder-Motor.

In **Figur 1** ist der erfindungsgemäße Verbrennungsmotor als 6-Zylinder-Motor 1 dargestellt, der die Zylinder 2.1 bis 2.6 aufweist. Die Abgase der Zylinder 2.1 bis 2.3 werden in dem Krümmer 3 zu dem Abgasstrom 5 zusammengefaßt. Die Abgase der Zylinder 2.4 bis 2.6 werden mit dem Krümmer 4 zu dem zweiten Abgasstrom 6 zusammengefaßt. Die Abgase des Abgasstroms 5 werden mit der Rohrleitung 22 zu dem Turbolader 8 geleitet, in dem sie eine Turbine antreiben, die Frischluft, die über die Rohleitung 15 angesaugt wird, verdichtet. Die Abgasströme 6 werden über die Rohrleitung 23 zu dem Turbolader 9 geleitet, den sie ebenfalls antreiben, so dass Frischluft, die über die Leitung 16 angesaugt wird, verdichtet wird. Die durch die beiden Turbolader verdichtete Frischluft strömt durch die Leitungen 24 bzw. 25 und wird in der Leitung 17 zusammengefaßt, über einen Ladekühler 18 geleitet und durchströmt dann eine Drosselklappe 20, mit der die in den Verbrennungsmotor geförderte Frischluft geregelt wird. Die Frischluft wird dann in dem Verteiler 21 auf die 6 Zylinder verteilt. Die Abgasströme 5, 6 durchströmen nach den Turboladern jeweils einen Vorkatalysator 13 und deren Hauptkatalysator 14 und verlassen dann den Auspuff. Werden nun so viele Zylinder abgeschaltete bzw. die Last reduziert, dass die beiden Turbolader nicht mehr hinreichend effizient arbeiten, wird die Klappe 10 in der Rohrleitung 22 geschlossen, so dass der Abgasstrom 5 über die Leitung 7 zu dem Turbolader 9 geleitet wird. Dadurch erhält der Turbolader 9 soviel Abgas, dass er in der Nähe seines optimalen Arbeitspunktes arbeitet. Die verdichtete Luft wird dann wie oben beschrieben über die Leitungen 24 und 17 zu den Zylindern geleitet. Zur Reduzierung des Ansprechverhaltens des Turboladers 8 bei dessen Wiederinbetriebnahme ist es vorteilhaft, wenn ein kleiner Leckagestrom die Klappe passiert und die Turbine des Turboladers 8 auf Drehzahl hält, ohne dass Frischluft gefördert wird. In der Leitung 24 befindet sich ein Ventil 11 und in der Leitung 15 eine Rückschlagklappe 12. Im Teillastbereich; d.h. wenn die Klappe 10 geschlossen ist, wird das Ventil 11 zumindest teilweise geöffnet, so dass der Druck, der in Leitung 24 anliegt im wesentlichen auch hinter dem Ventil 11 anliegt und somit die Rückschlagklappe 12 in die in der Figur 1 dargestellten Position drückt, so dass die Saugseite des Turboladers 8 von der Frischluftzufuhr abgetrennt ist. Durch die Öffnung des Ventils 11 und durch die Rückschlagklappe liegt an der Saugseite des Turboladers Ladedruck an, so dass dieser sobald die Klappe 10 wieder geöffnet wird, nur eine sehr kurze oder gar keine Ansprechzeit benötigt um den gewünschten Ladedruck zur Verfügung zustellen. Sobald wieder so viele Zylinder sich im Einsatz befinden, dass beide Turbolader hinreichend gut arbeiten, wird die Klappe 10 geöffnet und das Ventil 11 geschlossen. Dadurch fällt die Rückschlagklappe 12 nach unten und der Turbolader 8 kann auf der Saugseite Frischluft anziehen und diese Verdichten.

Mit dem erfindungsgemäßen Verbrennungsmotor können Zylinder sehr variabel abgeschaltet werden. Die Ansprechzeit der Turbolader bei Erhöhung der Motorleistung ist sehr kurz.

In Figur 2 ist der erfindungsgemäße Verbrennungsmotor mit 8 Zylindern dargestellt. Die Zylinder 2.2, 2.3, 2.5 und 2.8 sind zu einem Abgasstrom 5 und die Zylinder 2.1, 2.4, 2.6 und 2.7 zu dem anderen Abgasstrom 6 zusammengefaßt. Der Fachmann erkennt, dass die Abgasrohre so zusammengeführt sind, dass ein gleichmäßiger Zündabstand bei jedem Lader vorliegt. Dies hat weniger Restgas, mehr Leistung und/oder einen reduzierten Kraftstoffverbrauch zur Folge. Diese Vorteile ergeben sich nur wenn die Lader innerhalb der V-Anordnung der Zylinder angeordnet sind. Bei einer Anordnung der Lader außerhalb der V-Anordnung der Zylinder sind diese Vorteile nicht erzielbar. Im übrigen funktioniert die Turboladerabschaltung und die Zusammenfassung der beiden Abgasströme wie bei Figur 1 dargestellt.

### Bezugszeichenliste:

- 1: Verbrennungsmotor
- 2.1 bis 2.8: Zylinder
- 3, 4: Krümmer
- 5, 6: Abgasströme
- 7: Verbindungsleitung
- 8: erster Turbolader
- 9: zweiter Turbolader
- 10: Klappe
- 11: Ventil
- 12: Rückschlagklappe
- 13: Vorkatalysator
- 14: Hauptkatalysator
- 15, 16: Frischluftzuleitung
- 17: Druckleitung der Frischleitung nach den Turboladern
- 18: Ladeluftkühler
- 19: Frischluft
- 20: Drosselklappe
- 21: Frischluftverteiler
- 22, 23: Rohrleitung
- 24: Rohrleitung
- 25: Rohrleitung

## Patentansprüche

1. Verbrennungsmotor (1) mit mehreren Zylindern (2.1-2.8), von denen mindestens einer während des Betriebes des Verbrennungsmotors (1) ab- oder zuschaltbar ist und mit zwei Abgasturboladern (8, 9), die durch die Abgasströme antreibbar sind und Frischluft für den Verbrennungsmotor (1) auf Ladedruck verdichten, wobei die Abgasströme durch eine Verbindung (7) verbindbar sind und er ein Mittel (10) aufweist, das in Abhängigkeit der in Betrieb befindlichen Zylinder (2.1-2.8) im wesentlichen alle Abgase durch einen Abgasturbolader (9) leitet, wobei ein Abgasturbolader (8) mit einem Absperrorgan (10) von den Abgasströmen zumindest teilweise abtrennbar ist,
**dadurch gekennzeichnet, dass** die Abgase der mehreren Zylinder (2.1-2.8) mit Krümmern (3, 4) zu mindestens zwei Abgasströmen (5, 6) zusammenfassbar sind, wobei der Verbrennungsmotor (1) Stellorgane (11, 12) aufweist, die so einstellbar sind, dass an der Luftseite des abgeschalteten Abgasturboladers Ladedruck anliegt und wobei das zweite Stellorgan (12) in einer Frischluftleitung des abschaltbaren Abgasturboladers (8) angeordnet ist und wobei eine weitere Leitung vorgesehen ist, die eine Druckluftleitung (24) des dauerhaft betriebenen Abgasturboladers (9) mit der Frischluftleitung des abschaltbaren Abgasturboladers (8) verbindet, wobei die weitere Leitung zwischen dem ersten Stellorgan (11) und dem abschaltbaren Abgasturbolader (8) in die Frischluftleitung mündet und wobei das erste Stellorgan (11) in der Druckluftleitung (24) des dauerhaft betriebenen Abgasturboladers (9) angeordnet ist.

2. Verbrennungsmotor nach Anspruch 1,
**dadurch gekennzeichnet, dass** jeweils einem Abgasturbolader (8, 9) ein Vorkatalysator nachgeordnet ist.

## Claims

1. An internal combustion engine (1) comprising a number of cylinders (2.1 - 2.8), at least one of which can be switched on and off during operation of the engine (1), also comprising two turbochargers (8, 9) which are drivable by the flows of exhaust gas and compress fresh air to the boost pressure for the engine (1), wherein the flows of exhaust gas are connectable by a connection (7) and the engine also comprises means (10) which, depending on the cylinders (2.1 - 2.8) in operation, conveys substantially all the exhaust gases through a turbocharger (9), wherein one turbocharger (8) can be at least partly disconnected from the flows of exhaust gas by a shut-off means (10),
**characterised in that** the exhaust gases from the plurality of cylinders (2.1 - 2.8) can be combined into at least two flows (5, 6) of exhaust gas via manifolds (3, 4), wherein the engine (1) has adjusting means (11, 12) which can be set so that the air side of the switched-off turbocharger is at the boost pressure and wherein the second adjusting means (12) is disposed in a fresh-air pipe of the switchable turbocharger (8) and wherein an additional pipe connects a compressed-air pipe (24) of the permanently driven turbocharger (9) to the fresh-air pipe of the switchable turbocharger (8), wherein the additional pipe opens into the fresh-air pipe between the first adjusting means (11) and the switchable turbocharger (8) and wherein the first adjusting means (11) is disposed in the compressed-air pipe (24) of the permanently operating turbocharger (9).

2. An internal combustion engine according to claim 1, **characterised in that** a precatalytic converter is disposed behind each turbocharger (8, 9).

## Revendications

1. Moteur à combustion (1) à plusieurs cylindres (2.1-2.8) dont au moins l'un peut être neutralisé ou activé pendant le fonctionnement du moteur à combustion (1) ainsi que deux turbocompresseurs de gaz d'échappement (8, 9) entraînés par les veines des gaz d'échappement pour comprimer l'air frais alimentant le moteur à combustion (1) à la pression d'alimentation,
les veines de gaz d'échappement étant reliées par une liaison (7) et il est prévu un moyen (10) qui, en fonction des cylindres (2.1-2.8) en service, conduit pratiquement tous les gaz d'échappement dans un turbocompresseur de gaz d'échappement (9),
le turbocompresseur de gaz d'échappement (8) pouvant être au moins partiellement coupé des veines de gaz d'échappement par un organe d'arrêt (10),
**caractérisé en ce que**
les gaz d'échappement des différents cylindres (2.1-2.8), sont réunis dans des collecteurs (3, 4) en au moins deux veines de gaz d'échappement (5, 6),
* le moteur à combustion (1) comporte des organes d'actionnement (11, 12) réglables pour que la pression d'alimentation soit appliquée au côté air du turbocompresseur de gaz d'échappement neutralisé, et
* le second organe d'actionnement (12) est installé dans la conduite d'air frais du turbocompresseur de gaz d'échappement (8) qui peut être coupé, et
* une autre conduite relie une conduite d'air comprimé (24) du turbocompresseur de gaz d'échappement (9) fonctionnant en permanence, à la conduite d'air frais du turbocompresseur de gaz d'échappement (8) qui a été neutralisé,
* l'autre conduite débouche entre le premier organe d'actionnement (11) et le turbocompresseur de gaz d'échappement (8) neutralisable dans la conduite d'air frais, et
* le premier organe d'actionnement (11) équipe la conduite d'air comprimé (24) du turbocompresseur de gaz d'échappement (9) fonctionnant en permanence.

2. Moteur à combustion selon la revendication 1,
**caractérisé en ce qu'**
à chaque turbocompresseur de gaz d'échappement (8, 9), est associé un catalyseur amont.
